# FASCICULE DE BREVET EUROPEEN

(11) **EP 0 371 946 B1**
(45) Date de publication et mention de la délivrance du brevet: **03.02.1993**
(21) Numéro de dépôt: 89870180.0
(22) Date de dépôt: 14.11.1989
(51) Int. Cl.: C25D 5/34, C23C 4/02, C23C 14/02, B23K 26/12, B21B 27/00

(54) **Procédé de fabrication d'un cylindre de laminoir**
Verfahren zur Herstellung einer Walze
Method for manufacturing a rolling mill roll

(30) Priorité: 30.11.1988 BE 8801351
(43) Date de publication de la demande: 06.06.1990
(73) Titulaire: CENTRE DE RECHERCHES METALLURGIQUES CENTRUM VOOR RESEARCH IN DE METALLURGIE Assoc. sans but lucratif Ver, zonder winstoogmerk, B-1040 Bruxelles (BE)
(72) Inventeur: Terreur, Frédéric, B-4620 Fleron (BE); Defourny, Jacques, B-4320 Saint-Nicolas (BE)
(74) Mandataire: Lacasse, Lucien Emile

(56) Documents cités:
- EP-A- 0 166 517
- EP-A- 0 278 942
- EP-A- 0 280 671
- TECHNISCHE RUNDSCHAU, vol. 79, no. 25, 19 juin 1987, pages 30-34, Bern, CH; P. MAGNIN: "Oberflächenbehandlung mit Laser"

## Description

La présente invention concerne un procédé de fabrication d'un cylindre de laminoir présentant une durée de vie accrue.

Le procédé de marquage de la surface d'un cylindre de laminoir au moyen d'un faisceau laser intermittent est à présent bien connu, notamment par le brevet BE-A-870609. On rappellera brièvement que ce procédé consiste à former, dans la surface du cylindre, des microcratères obtenus par fusion locale du métal, chaque microcratère étant entouré d'un bourrelet formé par refoulement du métal fondu.

Dans la proposition d'une variante faisant l'objet du brevet BE-A-898952, on préconisait d'insuffler un jet d'oxygène vers la zone d'impact du faisceau laser pour influencer le processus de fusion du métal et la formation du microcratère et du bourrelet.

Par la suite, le même demandeur a également proposé, par le brevet BE-A-8700874, de remplacer le jet d'oxygène par un jet de gaz non oxydant. Cette technique permet d'améliorer la régularité et l'adhérence des bourrelets.

Parallèlement, il est bien connu de revêtir un cylindre de laminoir d'une couche d'un métal tel que le chrome, dans le but d'augmenter sa dureté superficielle et sa durée de vie.

La présente invention a pour objet un procédé permettant d'améliorer encore, dans de notables proportions, la durée de vie d'un cylindre de laminoir.

Elle est basée sur l'observation d'un effet inattendu résultant de la combinaison d'opérations connues séparément et ne présentant aucun lien entre elles.

Conformément à la présente invention, un procédé de fabrication d'un cylindre de laminoir dans lequel on marque la surface dudit cylindre au moyen d'un faisceau laser intermittent en présence d'un jet de gaz non oxydant insufflé vers la zone d'impact dudit faisceau laser, est caractérisé en ce que l'on dépose ensuite un revêtement métallique sur la surface du cylindre ainsi marqué.

Suivant une variante particulière, ledit gaz non oxydant insufflé est choisi parmi le groupe composé du dioxyde de carbone, l'argon, l'hélium, l'azote et un mélange d'azote avec un maximum de 5 % d'hydrogène.

Egalement suivant l'invention, on dépose sur la surface du cylindre une couche de chrome dont l'épaisseur est de préférence comprise entre 5 et 20 µm.

Il s'est également avéré intéressant de déposer ledit revêtement métallique par voie électrolytique.

Un cylindre de laminoir traité et revêtu conformément à la présente invention présente une durée de vie nettement accrue par rapport à un cylindre obtenu par un procédé antérieur.

L'intérêt du procédé de l'invention est illustré par l'exemple suivant, portant sur la production assurée, dans les mêmes conditions, par deux cylindres différents. Un cylindre marqué par un faisceau laser en présence de CO₂ mais non revêtu de chrome après le marquage a dû être reconditionné après avoir laminé environ 1000 tonnes de tôles d'acier. Un cylindre traité suivant l'invention, et dont le revêtement était constitué de chrome, a permis de laminer plus de 3600 tonnes de tôles d'acier avant de nécessiter un reconditionnement.

## Revendications

1. Procédé de fabrication d'un cylindre de laminoir, dans lequel on marque la surface dudit cylindre au moyen d'un faisceau laser intermittent en présence d'un jet de gaz non oxydant insufflé vers la zone d'impact dudit faisceau laser, caractérisé en ce que l'on dépose ensuite un revêtement métallique sur la surface du cylindre ainsi marqué.

2. Procédé suivant la revendication 1, caractérisé en ce que le gaz non oxydant insufflé est choisi parmi le groupe composé du dioxyde de carbone, l'argon, l'hélium, l'azote et un mélange d'azote avec un maximum de 5 % d'hydrogène.

3. Procédé suivant l'une ou l'autre des revendications 1 et 2, caractérisé en ce que le revêtement métallique est constitué par une couche de chrome.

4. Procédé suivant l'une ou l'autre des revendications 1 à 3, caractérisé en ce que le revêtement métallique a une épaisseur comprise entre 5 et 20 µm.

5. Procédé suivant l'une ou l'autre des revendications 1 à 4, caractérisé en ce que l'on dépose ledit revêtement métallique par voie électrolytique.

6. Cylindre de laminoir présentant une surface marquée au moyen d'un faisceau laser en présence d'un jet de gaz non oxydant et pourvu d'un revêtement métallique, fabriqué suivant l'une ou l'autre des revendications précédentes.

## Patentansprüche

1. Verfahren zur Herstellung einer Walzwerkwalze, bei dem man die Oberfläche der genannten Walze mit einem intermittierenden Laserstrahl in Gegenwart eines nicht oxidierenden Gasstroms, der auf den Auftreffbereich des genannten Laserstrahls geblasen wird, markiert, dadurch gekennzeichnet, daß man anschließend auf die Oberfläche der so markierten Walze einen metallischen Überzug aufbringt.

2. Verfahren nach Anspruch 1, dadurch gekennzeichnet, daß das nicht oxidierende geblasene Gas aus der Gruppe Kohlendioxid, Argon, Helium, Stickstoff sowie einer Mischung aus Stickstoff mit höchstens 5 % Wasserstoff ausgewählt ist.

3. Verfahren nach einem der Ansprüche 1 und 2, dadurch gekennzeichnet, daß der metallische Überzug aus einer Chromschicht besteht.

4. Verfahren nach einem der Ansprüche 1 bis 3, dadurch gekennzeichnet, daß der metallische Überzug eine Dicke zwischen 5 und 20 µm aufweist.

5. Verfahren nach einem der Ansprüche 1 bis 4, dadurch gekennzeichnet, daß man den genannten metallischen Überzug auf elektrolytischem Weg aufbringt.

6. Walzwerkwalze mit einer mittels eines Laserstrahls in Gegenwart eines nicht oxidierenden Gasstroms markierten und mit einem metallischen Überzug versehenen Oberfläche, die nach einem der vorhergehenden Ansprüche hergestellt wurde.

## Claims

1. Method of manufacturing a rolling mill roll, in which the surface of the said roll is marked by means of an intermittent laser beam in the presence of a stream of non-oxidising gas blown in towards the zone of impact of the said laser beam, characterised in that a metal coating is then deposited onto the surface of the roll thus marked.

2. Method according to Claim 1, characterised in that the non-oxidising gas blown in is chosen from the group composed of carbon dioxide, argon, helium, nitrogen and a mixture of nitrogen with a maximum of 5 % hydrogen.

3. Method according to either of Claims 1 and 2, characterised in that the metal coating is constituted by a layer of chromium.

4. Method according to any of Claims 1 to 3, characterised in that the metal coating has a thickness of between 5 and 20 µm.

5. Method according to any of Claims 1 to 4, characterised in that the said metal coating is deposited by electrolytic means.

6. Rolling mill roll having a surface marked by means of a laser beam in the presence of a stream of non-oxidising gas and provided with a metal coating, manufactured according to any of the preceding claims.
